# EUROPEAN PATENT APPLICATION

(11) **EP 3 904 812 A1**
(43) Date of publication of application: **03.11.2021**
(21) Application number: 19902970.3
(22) Date of filing: 24.12.2019
(51) Int. Cl.: F28D 15/02

(54) **LOOP-TYPE HEAT PIPE AND TRANSPORT DEVICE**

(30) Priority: 27.12.2018 JP 2018245272
(71) Applicant: Kawasaki Jukogyo Kabushiki Kaisha, Hyogo 650-8670 (JP)
(72) Inventor: HARUKI, Yu, Hyogo, 650-8670 (JP); SAKAGAWA, Keiji, Hyogo, 650-8670 (JP); HAKAMADA, Kazuhide, Hyogo, 650-8670 (JP); MITANI, Ryosuke, Hyogo, 650-8670 (JP)
(74) Representative: Dehns
(86) International application number: PCT/JP2019/050597
(87) International publication number: WO 2020/138079

(57) **Abstract**

A loop heat pipe incorporated into a transportation machine that performs tilting movements includes: an evaporator that changes at least a part of a working fluid from a liquid phase into a gas phase; first and second condensers that change the working fluid from the gas phase into the liquid phase; first vapor and liquid conduits connecting the evaporator and the first condenser; and second vapor and liquid conduits connecting the evaporator and the second condenser. When the transportation machine is placed on a horizontal surface, the first and second condensers are located above the evaporator, and the first and second condensers are spaced apart in a horizontal direction, with the tilt axis and the evaporator interposed between the first and second condensers.

## Description

### Technical Field

The present invention relates to a loop heat pipe and a transportation machine including the loop heat pipe.

### Background Art

A loop heat pipe technology has been traditionally known which uses phase changes of a working fluid to achieve high-density heat transport. A heat transport system employing such a loop heat pipe has been used, for example, to cool an electronic device such as a computer or home electric appliance. In some loop heat pipes, the working fluid is circulated by means of capillary force and/or gravity.

A loop heat pipe includes a closed loop formed by an evaporator, a condenser, a vapor conduit leading from the evaporator to the condenser, and a liquid conduit leading from the condenser to the evaporator. The closed loop is charged with a working fluid. In the evaporator, the working fluid in a liquid phase is heated by heat transferred from a heat-generating element, and a part of the working fluid changes into a gas phase. The gas-liquid two-phase working fluid moves in the vapor conduit under the action of pressure difference and buoyancy and reaches the condenser. In the condenser, the working fluid is cooled into the liquid phase. The liquid-phase working fluid returns to the evaporator under the action of capillary force and/or gravity. In this manner, the loop heat pipe allows the working fluid to circulate in the two-phase closed loop and transport heat from the evaporator to the condenser, thereby cooling the heat-generating element thermally connected to the evaporator.

When the loop heat pipe as described above is one which uses gravity for circulation of the working fluid, a change in the position of the loop heat pipe could reduce or reverse the head difference created by a height difference between the locations of the condenser and evaporator, thus making it harder for the working fluid to move from the condenser to the evaporator. In the event that the tilt of the loop heat pipe is further increased due to a change in position, the working fluid has difficulty in returning to the evaporator, and the heat transport could eventually cease. To address this problem, Patent Literature 1 proposes a multi-loop heat pipe adapted for use in an electronic device such as a laptop computer or smartphone which is used in various positions including horizontal, vertical, and oblique positions, the multi-loop heat pipe being capable of exhibiting the heat transport function in any position. The multi-loop heat pipe includes a stack of two loop heat pipes independent of each other, and each loop heat pipe is in the form of a rectangle at diagonally opposite corners of which an evaporator and a condenser are located respectively. In plan view, the evaporators of the two loop heat pipes overlap each other, while the condensers are at different locations.

### Citation List

### Patent Literature

PTL 1: Japanese Laid-Open Patent Application Publication No. 2012-233642

### Summary of Invention

### Technical Problem

Electronic devices have become more and more sophisticated and miniaturized, and this has recently led to a growing demand for thermal management in transportation machines such as watercrafts, railcars, automobiles, and aircrafts which are equipped with a large number of the sophisticated, miniaturized devices. Some transportation machines incorporate a heat transport system including a loop heat pipe as described above which uses gravity for circulation of a working fluid, and such a transportation machine, the position of the body of which constantly changes, suffers a position change-induced decrease in the drive force for allowing the working fluid to circulate and a corresponding decrease in the heat transport rate.

In the multi-loop heat pipe of Patent Literature 1, one of the two independent loop heat pipes maintains the circulation of the working fluid in the event of a change in the position of the multi-loop heat pipe, and the position change-induced cessation of heat transport can be prevented. In this case, however, the heat transport in the other loop heat pipe ceases. Thus, the size of the cooling device needs to be increased in order to ensure an adequate heat transport rate when the cooling device is tilted owing to a position change.

The present invention has been made in view of the above circumstances, and an object of the present invention is to provide a loop heat pipe and a transportation machine including the loop heat pipe, the loop heat pipe and transportation machine having a reduced size and being adapted to maintain a sufficient heat transport rate and reliably cool a cooling target despite changes in the position of the loop heat pipe.

### Solution to Problem

A loop heat pipe according to an aspect of the present invention is incorporated into a transportation machine tiltable about a tilt axis and includes: an evaporator that changes at least a part of a working fluid from a liquid phase into a gas phase; a first condenser that changes the working fluid from the gas phase into the liquid phase; a second condenser that changes the working fluid from the gas phase into the liquid phase; a first vapor conduit connecting the evaporator and the first condenser; a first liquid conduit connecting the evaporator and the first condenser; a second vapor conduit connecting the evaporator and the second condenser; and a second liquid conduit connecting the evaporator and the second condenser. When the transportation machine is placed on a horizontal surface, the first and second condensers are located above the evaporator, and the first and second condensers are spaced apart in a horizontal direction, with the tilt axis and the evaporator interposed between the first and second condensers.

With the above loop heat pipe, when the transportation machine rotates about the tilt axis and accordingly the position of the loop heat pipe is changed, the drive force for allowing the working fluid to flow from one of the first and second condensers to the evaporator increases, although the drive force for allowing the working fluid to flow from the other of the first and second condensers to the evaporator decreases. As such, the loop heat pipe can, despite changes in its position, maintain a sufficient amount of working fluid circulation and continue heat transport without a decrease in heat transport rate.

A transportation machine according to an aspect of the present invention includes a heat-generating element and the loop heat pipe as defined above, and the evaporator of the loop heat pipe uses the heat-generating element as a heat source to evaporate the working fluid.

As previously stated, the loop heat pipe can maintain sufficient heat transport performance despite changes in its position. Thus, such a loop heat pipe is suitable for cooling a heat-generating element mounted on a transportation machine the positon of the body of which constantly changes.

### Advantageous Effects of Invention

The present invention can provide a loop heat pipe and a transportation machine including the loop heat pipe, the loop heat pipe and transportation machine being adapted to maintain a sufficient heat transport rate despite changes in the position of the loop heat pipe.

### Brief Description of Drawings

FIG. 1 illustrates a transportation machine incorporating a loop heat pipe according to an exemplary embodiment of the present invention.
FIG. 2 illustrates the transportation machine of FIG. 1 tilting about a tilt axis.
FIG. 3 is a plan view illustrating the relationship between the location of an evaporator and the locations of two condensers.
FIG. 4 is a plan view illustrating a variant of the relationship between the location of the evaporator and the locations of the two condensers.
FIG. 5 illustrates the configuration of a loop heat pipe according to a first variant.

### Description of Embodiments

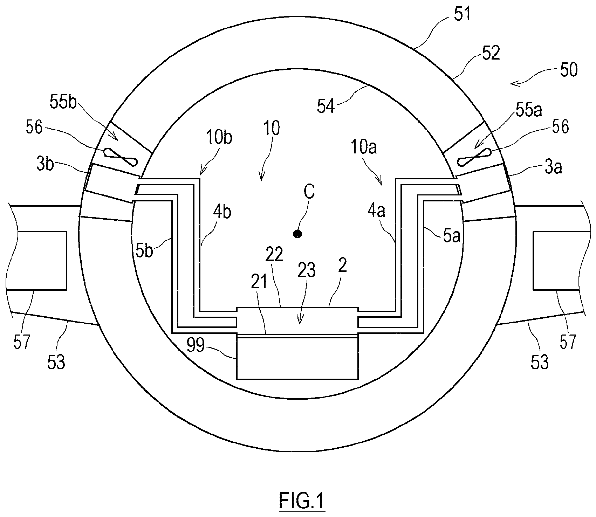

Hereinafter, an exemplary embodiment of the present invention will be described with reference to the drawings. FIG. 1 illustrates an example of a transportation machine incorporating a loop heat pipe 10 according to the exemplary embodiment of the present invention. The loop heat pipe 10 is suitable for incorporation into a transportation machine tiltable about a tilt axis C. Examples of the transportation machine include watercrafts (including submersibles), railcars, automobiles, and aircrafts. The following describes an aircraft 50 incorporating the loop heat pipe 10.

FIG. 1 partially shows a fuselage 51 and main wings 53 of the aircraft 50. The fuselage 51 has a multilayer structure including an outer panel 52 and an inner wall 54 located closer to the cabin than the outer panel 52. Between the outer panel 52 and inner wall 54 are defined cooling chambers 55a and 55b. In this exemplary embodiment, the first cooling chamber 55a is located on the right side of the fuselage 51 in the figure, and the second cooling chamber 55b is located on the left side of the fuselage 51 in the figure. The first and second cooling chambers 55a and 55b may be separate from or in communication with each other. The temperatures inside the cooling chambers 55a and 55b are low because of cold energy transferred from the outer panel 52 which during flight is exposed to outside air (an example of an external fluid) having a considerably lower temperature than that near the ground. Alternatively, the outer panel 52 may be provided with air inlets and outlets communicating with the cooling chambers 55a and 55b, and the outside air may be introduced into the cooling chambers 55 during flight.

The left and right main wings 53 are joined to the lateral sides of the fuselage 51. Each main wing 53 has an interior enclosing a fuel tank 57. During flight, the main wing 53 is exposed to outside air having a considerably lower temperature than that near the ground, and the fuel tank 57 and the fuel stored in it are cooled by the outside air.

The above aircraft 50 incorporates the loop heat pipe 10 to cool a heat-generating element 99 located in the fuselage 51. Examples of the heat-generating element 99 include, but are not limited to: an electronic device including heat-generating parts, such as a control board, an engine control unit (ECU), or a computer; a friction heat-generating mechanical part such as a bearing; and a battery. Air inside the cabin may be used as the heat source for the evaporator 2 instead of the heat-generating element 99.

The loop heat pipe 10 includes a first loop 10a and a second loop 10b as circulation paths. These circulation paths are in communication at the evaporator 2. The first loop 10a is formed by the evaporator 2, a first vapor conduit 4a, a first condenser 3a, and a first liquid conduit 5a. The second loop 10b is formed by the evaporator 2, a second vapor conduit 4b, a second condenser 3b, and a second liquid conduit 5b. The first and second loops 10a and 10b share the evaporator 2.

The loop heat pipe 10 is degassed beforehand to remove a non-condensable gas such as air and then charged with a working fluid. The working fluid is not limited to particular fluids, and may be a condensable fluid commonly used as a working fluid in heat pipes. Examples of the condensable fluid include water, an alcohol, ammonia, a fluorocarbon, a hydrofluorocarbon, a hydrofluoroether, and a liquid mixture of these fluids.

The evaporator 2 includes a heat transfer plate 21 and a housing 22 defining a working fluid-receiving chamber 23. The heat transfer plate 21 is thermally connected to the heat-generating element 99, for example, via thermal grease or a heat transfer sheet. In this evaporator 2, the working fluid in the working fluid-receiving chamber 23 absorbs heat from the heat-generating element 99 via the heat transfer plate 21, and a part of the working fluid boils and changes into the gas phase. The two-phase working fluid consisting of the vapor phase resulting from the boiling and the liquid phase moves in the first vapor conduit 4a connecting the outlet of the evaporator 2 and the inlet of the first condenser 3a under the action of pressure difference and buoyancy and reaches the first condenser 3a. Further, the two-phase working fluid moves in the second vapor conduit 4b connecting the outlet of the evaporator 2 and the inlet of the second condenser 3b under the action of pressure difference and buoyancy and reaches the second condenser 3b. That is, the working fluid-receiving chamber 23 is in communication with both the first and second condensers 3a and 3b.

The first condenser 3a is located in the first cooling chamber 55a, and the second condenser 3b is located in the second cooling chamber 55b. In each of the cooling chambers 55a and 55b is disposed a fan 56 for forcing a gas flow to pass the condenser 3a or 3b. The first and second condensers 3a and 3b have substantially the same structure. Each of the first and second condensers 3a and 3b is provided with a cooling path (not shown), and the two-phase working fluid releases heat and is cooled into the liquid phase during passage through the cooling path. The liquid-phase working fluid descends in the first liquid conduit 5a connecting the outlet of the first condenser 3a and the inlet of the evaporator 2 under the action of gravity and returns to the evaporator 2. Likewise, the working fluid changed into the liquid phase in the second condenser 3b descends in the second liquid conduit 5b connecting the outlet of the second condenser 3b and the inlet of the evaporator 2 under the action of gravity and returns to the evaporator 2.

For the loop heat pipe 10 configured as described above, a position assumed by the loop heat pipe 10 when the aircraft 50 (an example of the transportation machine) incorporating the loop heat pipe 10 is placed on a horizontal surface is defined as a "reference position". In the loop heat pipe 10 assuming the reference position, the first and second condensers 3a and 3b are located above the evaporator 2. The working fluid naturally circulates in the first and second loops 10a and 10b under the action of head-related pressure difference. Once the position of the loop heat pipe 10 is changed from the reference position, the head difference originating from the height difference between the location of the evaporator 2 and the locations of the condensers 3a and 3b changes, and accordingly the drive force for allowing the working fluid to circulate changes.

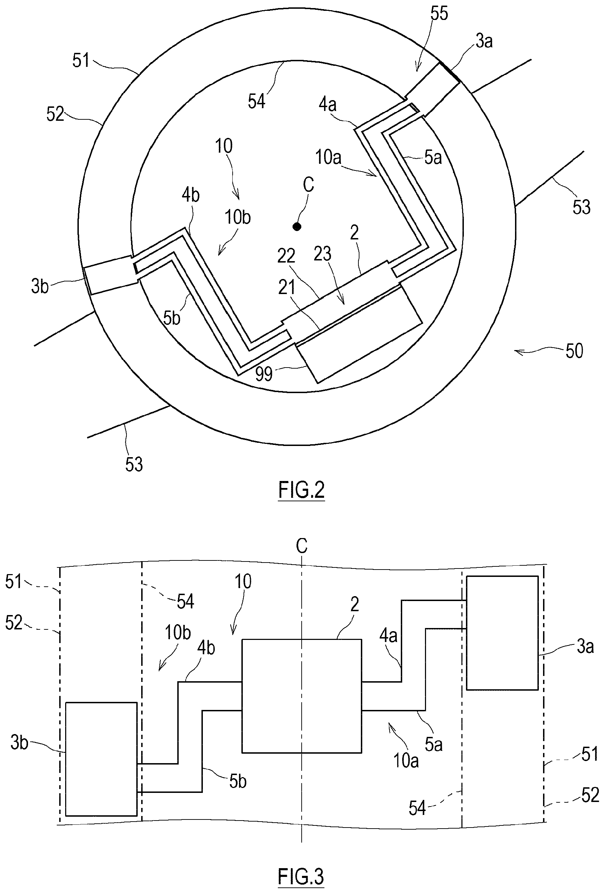

To accommodate these changes, the first and second condensers 3a and 3b are arranged such that in the loop heat pipe 10 assuming the reference position, the condensers 3a and 3b are spaced apart in the horizontal direction, with the tilt axis C of the aircraft 50 (i.e., the rotational center of tilting movement) and the evaporator 2 interposed between the condensers 3a and 3b. Additionally, in the loop heat pipe 10 assuming the reference position, the evaporator 2 is located in a vertical plane passing through the tilt axis C. Further, in the loop heat pipe 10 assuming the reference position, the first and second condensers 3a and 3b as viewed in a direction parallel to the tilt axis C are located symmetrically about a vertical line passing through the tilt axis C. With the evaporator 2 and condensers 3a and 3b thus arranged, when the aircraft 50 rotates about the tilt axis C as shown in FIG. 2, the head difference originating from the height difference between the locations of the first condenser 3a and evaporator 2 becomes greater than when the loop heat pipe 10 is in the reference position, and the drive force for allowing the working fluid to circulate in the first loop 10a remains the same or increases, although the head difference originating from the height difference between the locations of the second condenser 3b and evaporator 2 and therefore the drive force for allowing the working fluid to circulate in the second loop 10b become smaller than when the loop heat pipe 10 is in the reference position. As such, in the event that the position of the loop heat pipe 10 is changed in response to a tilting movement of the aircraft 50, the overall circulation flow rate of the working fluid remains unchanged, so that the heat transport rate can be kept high enough to cool the heat-generating element 99 sufficiently.

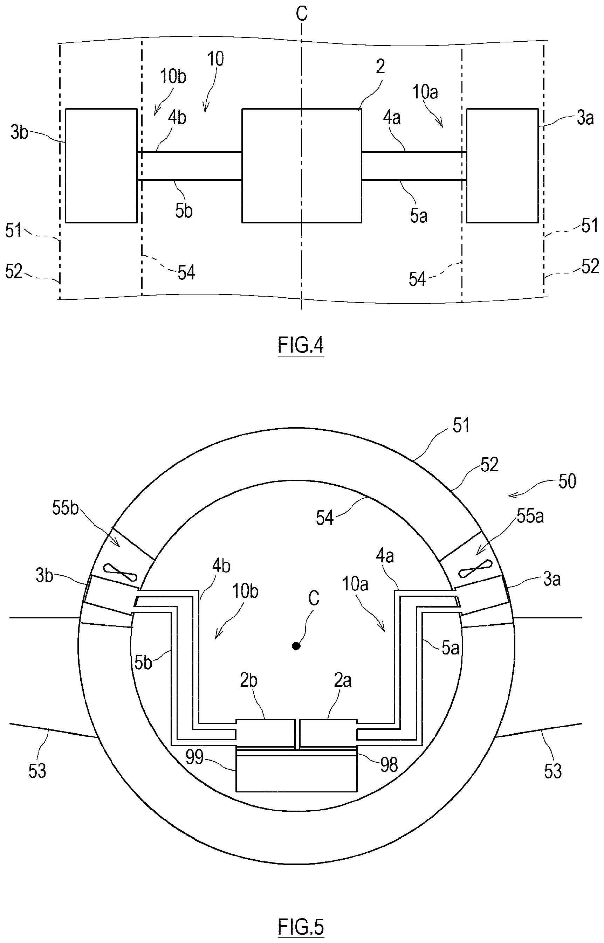

FIG. 3 is a plan view illustrating the relationship between the location of the evaporator 2 and the locations of the two condensers 3a and 3b. As shown in FIG. 3, the first and second condensers 3a and 3b are spaced apart in the direction of the tilt axis C, with the evaporator 2 interposed between the condensers 3a and 3b. That is, in the aircraft 50, the locations of the first and second condensers 3a and 3b in the front-rear direction are spaced apart, with the evaporator 2 interposed between the locations of the condensers 3a and 3b. Thus, when the body of the aircraft 50 tilts in the front-rear direction during ascent or descent of the aircraft 50, the drive force for allowing the working fluid to circulate increases in one of the first and second loops 10a and 10b, although the drive force decreases in the other of the first and second loops 10a and 10b. As such, the total amount of working fluid circulation of the first and second loops 10a and 10b is maintained at a sufficient level, and a significant decrease in the heat transport rate can be avoided. If the height difference between the location of the evaporator 2 and the locations of the first and second condensers 3a and 3b is large enough to obtain a sufficient head pressure in the event that the body of the aircraft 50 tilts in the front-rear direction, the locations of the evaporator 2 and the two condensers 3a and 3b in the direction of the tilt axis C may be the same as shown in FIG. 4.

As described above, the loop heat pipe 10 according to the exemplary embodiment is incorporated into a transportation machine tiltable about a tilt axis C and includes: an evaporator 2 that changes at least a part of a working fluid from a liquid phase into a gas phase; a first condenser 3a that changes the working fluid from the gas phase into the liquid phase; a second condenser 3b that changes the working fluid from the gas phase into the liquid phase; a first vapor conduit 4a connecting the evaporator and the first condenser; a first liquid conduit 5a connecting the evaporator and the first condenser; a second vapor conduit 4b connecting the evaporator and the second condenser; and a second liquid conduit 5b connecting the evaporator and the second condenser. When the transportation machine is placed on a horizontal surface, the first and second condensers 3a and 3b are located above the evaporator 2, and the first and second condensers 3a and 3b are spaced apart in a horizontal direction, with the tilt axis C and the evaporator 2 interposed between the first and second condensers 3a and 3b.

The transportation machine according to the exemplary embodiment includes a heat-generating element 99 and the loop heat pipe 10, and the evaporator 2 of the loop heat pipe 10 uses the heat-generating element 99 as a heat source to evaporate the working fluid. In the exemplary embodiment, the transportation machine is an aircraft 50. The aircraft 50 includes an outer panel 52 exposed to an external fluid and an inner wall 54 located inward of the outer panel 52, and at least one of the first and second condensers 3a and 3b is located in a cooling chamber 55a or 55b defined between the outer panel 52 and the inner wall 54.

With the loop heat pipe 10 and the transportation machine including the loop heat pipe 10, when the position of the loop heat pipe 10 is changed in response to a tilting movement of the transportation machine, the drive force for allowing the working fluid to flow from one of the first and second condensers 3a and 3b to the evaporator 2 is kept large enough, although the drive force for allowing the working fluid to flow from the other of the first and second condensers 3a and 3b to the evaporator 2 decreases. As such, despite the change in the position of the loop heat pipe 10, a sufficient amount of working fluid circulation is maintained, and the heat transport continues without a decrease in heat transport rate.

In the loop heat pipe 10 and the transportation machine incorporating the loop heat pipe 10, as illustrated in the exemplary embodiment, the evaporator 2 may be located in a vertical plane passing through the tilt axis C when the transportation machine is placed on a horizontal surface.

When, as in this case, the evaporator 2 is located on the tilt axis C, a good balance can be achieved between the flows of the working fluid from the evaporator 2 to the first and second condensers 3a and 3b and between the flows of the working fluid from the first and second condensers 3a and 3b to the evaporator 2.

In the loop heat pipe and the transportation machine, the first and second condensers 3a and 3b, as viewed in a direction parallel to the tilt axis C, may be located symmetrically about a vertical line passing through the tilt axis C.

In this case, the horizontal distance from the first condenser 3a to the tilt axis C and the horizontal distance from the second condenser 3b to the tilt axis C are equal, and a good balance can be achieved between the flows of the working fluid from the evaporator 2 to the first and second condensers 3a and 3b and between the flows of the working fluid from the first and second condensers 3a and 3b to the evaporator 2.

In the loop heat pipe 10 and the transportation machine incorporating the loop heat pipe 10, as illustrated in the exemplary embodiment, the first and second condensers 3a and 3b may be spaced apart in a direction of the tilt axis C, with the evaporator 2 interposed between the first and second condensers 3a and 3b.

In this case, when the transportation machine rotates about an axis orthogonal to the tilt axis C and accordingly the position of the loop heat pipe 10 changes, the drive force for allowing the working fluid to flow from one of the first and second condensers 3a and 3b to the evaporator 2 is kept large enough, although the drive force for allowing the working fluid to flow from the other of the first and second condensers 3a and 3b to the evaporator 2 decreases. As such, despite the change in the position of the loop heat pipe 10, a sufficient amount of working fluid circulation is maintained, and the heat transport continues.

The transportation machine may include an outer panel 52 exposed to an external fluid and an inner wall 54 located inward of the outer panel 52, and at least one of the first and second condensers 3a and 3b may be located in a cooling chamber 55a or 55b defined between the outer panel 52 and the inner wall. 54.

In such a transportation machine, the working fluid can be condensed using cold energy from the external fluid (outside air). In particular, when the transportation machine is for use in an environment where the temperature of the outside air is considerably lower than normal temperatures (such as when the transportation machine is the aircraft 50), a large temperature difference is created between the heat-generating element 99 to which the evaporator 2 is thermally connected and the medium to which the condensers 3a and 3b release heat and, in consequence, more efficient heat transport can be achieved.

The transportation machine may further include a fuel tank 57, and at least one of the first and second condensers 3a and 3b may be located in a liquid phase contained in the fuel tank.

In such a transportation machine, the working fluid can be condensed using the fuel tank 57 having a high heat capacity. In particular, when the fuel tank 57 is adapted to actively exchange heat with an external fluid having a low temperature, a large temperature difference is created between the heat-generating element 99 to which the evaporator 2 is thermally connected and the medium to which the condensers 3a and 3b release heat and, in consequence, more efficient heat transport can be achieved.

Although the foregoing has described a preferred embodiment of the present invention, the scope of the present invention embraces modifications made to the details of the structure and/or function of the above embodiment without departing from the concept of the present invention. For example, the configurations of the loop heat pipe 10 and transportation machine can be modified as described below.

For example, while in the loop heat pipe 10 of the above embodiment the two condensers 3a and 3b are connected to the evaporator 2, three or more condensers may be connected to the evaporator 2.

For example, while in the loop heat pipe 10 of the above embodiment the first and second loops 10a and 10b are in communication inside the evaporator 2, the first and second loops 10a and 10b may have circulation paths independent of each other. In this case, for example, the loop heat pipe 10 may be configured such that, as shown in FIG. 5, the first loop 10a includes a first evaporator 2a and the second loop 10b includes a second evaporator 2b. To cool the heat-generating element 99 uniformly, the first and second evaporators 2a and 2b may be thermally connected to the heat-generating element 99 via a heat distribution plate 98 made of a material with high thermal conductivity.

For example, the loop heat pipe 10 of the above embodiment is not limited to the thermosyphon type, and may be of the wick type. The loop heat pipe of the wick type uses not only the capillary force acting on the working fluid in the wick but also gravity to return the working fluid from the condenser 3 to the evaporator 2. Thus, the present invention can offer the benefits as described above also when applied to a loop heat pipe of the wick type.

### Reference Signs List

2: evaporator
3a, 3b: condenser
4a, 4b: vapor conduit
5a, 5b: liquid conduit
10: loop heat pipe
21: heat transfer plate
22: housing
23: working fluid-receiving chamber
50: aircraft (example of transportation machine)
51: fuselage
52: outer panel
53: main wing
54: inner wall
55: cooling chamber
56: fan
57: fuel tank
99: heat-generating element

## Claims

1. A loop heat pipe incorporated into a transportation machine tiltable about a tilt axis, comprising:
an evaporator that changes at least a part of a working fluid from a liquid phase into a gas phase;
a first condenser that changes the working fluid from the gas phase into the liquid phase;
a second condenser that changes the working fluid from the gas phase into the liquid phase;
a first vapor conduit connecting the evaporator and the first condenser;
a first liquid conduit connecting the evaporator and the first condenser;
a second vapor conduit connecting the evaporator and the second condenser; and
a second liquid conduit connecting the evaporator and the second condenser, wherein
when the transportation machine is placed on a horizontal surface,
the first and second condensers are located above the evaporator, and
the first and second condensers are spaced apart in a horizontal direction, with the tilt axis and the evaporator interposed between the first and second condensers.

2. The loop heat pipe according to claim 1, wherein the evaporator is located in a vertical plane passing through the tilt axis when the transportation machine is placed on a horizontal surface.

3. The loop heat pipe according to claim 2, wherein the first and second condensers, as viewed in a direction parallel to the tilt axis, are located symmetrically about a vertical line passing through the tilt axis.

4. The loop heat pipe according to any one of claims 1 to 3, wherein the first and second condensers are spaced apart in a direction of the tilt axis, with the evaporator interposed between the first and second condensers.

5. A transportation machine comprising:
a heat-generating element; and
the loop heat pipe according to any one of claims 1 to 4, wherein
the evaporator of the loop heat pipe uses the heat-generating element as a heat source to evaporate the working fluid.

6. The transportation machine according to claim 5, further comprising:
an outer panel exposed to an external fluid; and
an inner wall located inward of the outer panel, wherein
at least one of the first and second condensers is located in a cooling chamber defined between the outer panel and the inner wall.

7. The transportation machine according to claim 5, further comprising a fuel tank, wherein
at least one of the first and second condensers is located in a liquid phase contained in the fuel tank.
